Europäisches Patentamt

European Patent Office

Office européen des brevets

(19)

(11) Numéro de publication : **0 463 928 A1**

# (12) DEMANDE DE BREVET EUROPEEN

(21) Numéro de dépôt : **91401628.2**

(51) Int. Cl.⁵ : **G01M 1/04**

(22) Date de dépôt : **18.06.91**

(30) Priorité : **29.06.90 FR 9008296**

(43) Date de publication de la demande :
**02.01.92 Bulletin 92/01**

(84) Etats contractants désignés :
**DE ES GB IT**

(71) Demandeur : **RENAULT AUTOMATION**
**8/10 avenue Emile Zola**
**F-92109 Boulogne-Billancourt (FR)**

(72) Inventeur : **Marty, Denis**
**"Lamothe"**
**F-81290 La Bruguière (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) **Dispositif permettant le montage d'une roue à l'extrémité d'une broche d'une équilibreuse, et procédé mis en oeuvre par un tel dispositif.**

(57)    La présente invention concerne un dispositif (10) permettant le montage d'une roue (1) à l'extrémité d'une broche d'une équilibreuse, comportant un plateau (25) sur lequel la roue vient en appui, et des doigts autocentrants (22) engagés dans l'orifice central (2) de la roue, le plateau étant mobile selon l'axe principal du dispositif afin d'assurer le plaquage de la roue, les doigts autocentrants assurant un bridage de celle-ci.

   La présente invention concerne également un procédé de montage mis en oeuvre par un tel dispositif.

   Application particulière à l'équilibrage de roues de véhicules automobiles.

EP 0 463 928 A1

FIG.1

La présente invention concerne un dispositif permettant le montage d'une roue à l'extrémité d'une broche d'une équilibreuse.

Elle concerne également un procédé mis en oeuvre par un tel dispositif.

Généralement, les dispositifs de ce type comportent un plateau mini de goujons et les roues sont alors montées sur ce plateau par l'intermédiaire de leurs trous de fixation engagés dans les goujons, et bridées par l'intermédiaire d'écrous vissés sur ces goujons.

De tels dispositifs n'assurent pas un centrage précis et ils sont de plus non-répétitifs.

Afin d'améliorer le centrage, donc l'équilibrage des roues, celles-ci comportent maintenant un orifice central, et les dispositifs de montage comportent, en plus du plateau et des goujons, des doigts autocentrants engagés dans les orifices centraux des roues et s'écartant radialement et simultanément.

Les roues sont ensuite bridées sur le dispositif, de la même manière que précédemment, c'est-à-dire par l'intermédiaire d'écrous vissés sur les goujons.

Ces dispositifs, à doigts autocentrants et goujons, permettent un bon centrage des roues mais la fixation de celles-ci est relativement longue, car il faut visser et dévisser au minimum trois écrous pour équilibrer une roue.

Ces dispositifs ne sont donc pas adaptés à une production en grande série telle que cela se pratique dans une usine assurant le montage d'un grand nombre de pneus par jour.

La présente invention a pour but de rendre l'opération d'équilibrage des roues plus rapide, et ce but est atteint en remplaçant les goujons et les écrous de fixation par un autre moyen de bridage.

La disparition des goujons permet alors de monter n'importe quel type de roues, qu'elles soient à trois, quatre ou cinq trous de fixation.

La présente invention a pour objet un dispositif permettant le montage d'une roue à l'extrémité d'une broche d'une équilibreuse, comportant un plateau sur lequel la roue vient en appui, et des doigts autocentrants engagés dans l'orifice central de la roue.

Selon l'invention, le plateau est mobile selon l'axe principal du dispositif afin d'assurer un plaquage de la roue, les doigts autocentrants assurant à eux seuls un bridage de la roue sur le dispositif.

Les doigts autocentrants sont manoeuvrés à l'aide d'un piston muni de plans inclinés coopérant avec des plans inclinés de pièces coulissantes chacune solidaire d'un doigt.

Selon une caractéristique de l'invention, le piston et le plateau sont manoeuvrés hydrauliquement.

La présente invention concerne également un procédé de montage d'une roue à l'extrémité d'une broche d'une équilibreuse, consistant à engager l'orifice central de la pièce sur des doigts autocentrants rétractés, à laisser reposer la pièce sur le plateau, à écarter les doigts afin de centrer la pièce.

Selon l'invention, ce procédé consiste à soulever le plateau afin d'assurer le plaquage de la pièce sur celui-ci, et à augmenter la pression des doigts contre l'orifice central de la pièce afin de la brider.

Selon une autre caractéristique de l'invention, le centrage s'effectue à une pression plus faible que le bridage.

Il est décrit ci-après à titre d'exemple et en référence aux dessins annexés, un dispositif selon l'invention et un procédé mis en oeuvre par un tel dispositif.

La figure 1 montre un dispositif selon l'invention dans lequel les doigts autocentrants sont en position de repos (rétractés);

la figure 2 montre le même dispositif, les doigts étant en position de travail (écartés les uns des autres);

la figure 3 est une vue de dessus de la figure 2; et

la figure 4 est une vue en coupe selon IV de la figure 1.

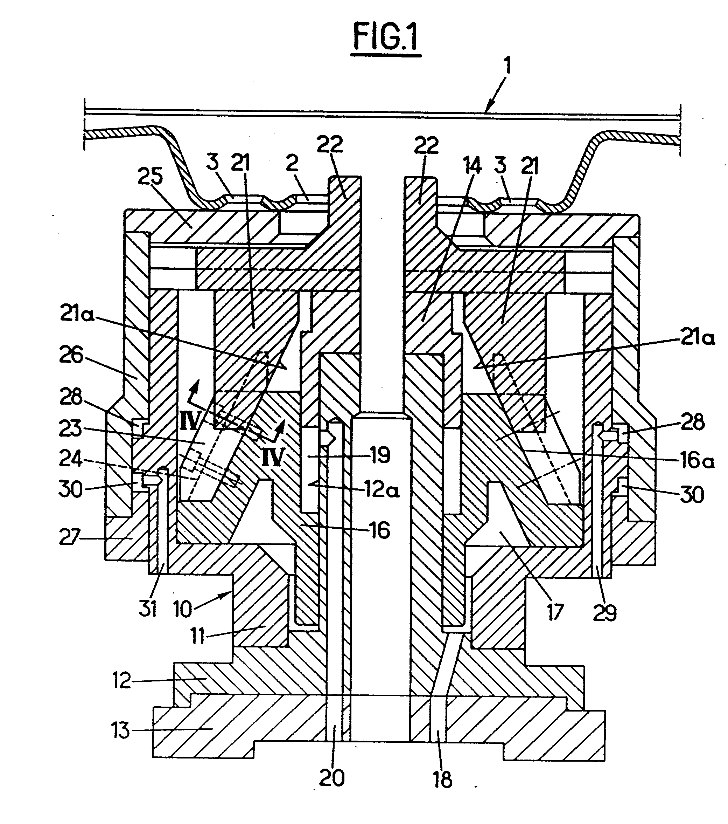

La figure 1 montre un dispositif selon l'invention sur lequel est installée une roue 1. La roue comporte un orifice central 2 et des trous de fixation 3. Le corps 10 du dispositif est constitué de parties fixes, telles que : une pièce principale 11 en forme de cloche, deux pièces 12,13 fermant la partie inférieure de la pièce 11, et une pièce 14 coiffant la partie centrale de la pièce 12.

Bien entendu, pour des questions de fabrication, toutes ces pièces pourraient être constituées de plusieurs parties, et pour des questions d'étanchéité, il va de soi que chaque interface entre deux pièces comporte au moins un joint d'étanchéité non représenté.

Ce dispositif comporte un piston 16 coulissant dans la pièce en cloche 11 et sur un épaulement 12a de la pièce centrale 12.

La partie basse de ce piston délimite avec les pièces 11 et 12, une chambre annulaire 17 alimentée en fluide par une canalisation 18.

L'alimentation de cette chambre provoque donc la montée du piston 16.

Ce piston délimite également avec l'épaulement 12a de la pièce 12 et la pièce 14, une autre chambre 19 alimentée en fluide par une canalisation 20. L'alimentation de cette chambre 19 provoque donc la descente du piston.

Bien entendu, lors de l'alimentation d'une chambre, l'autre chambre est à l'échappement.

Ce piston 16 comporte des plans inclinés 16a qui coopèrent avec un plan incliné 21a de pièces coulissantes 21 chacune solidaire d'un doigt coulissant 22.

Bien entendu, pour des questions de fabrication, ces pièces 21 et ces doigts 22 peuvent également être constitués de plusieurs parties.

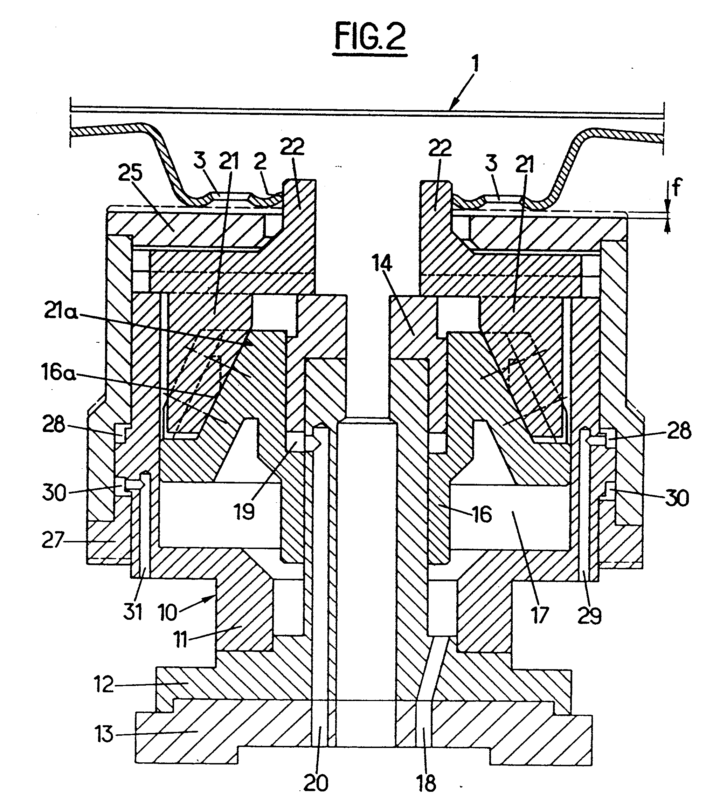

La montée du piston provoque donc l'écartement des doigts (voir figure 2).

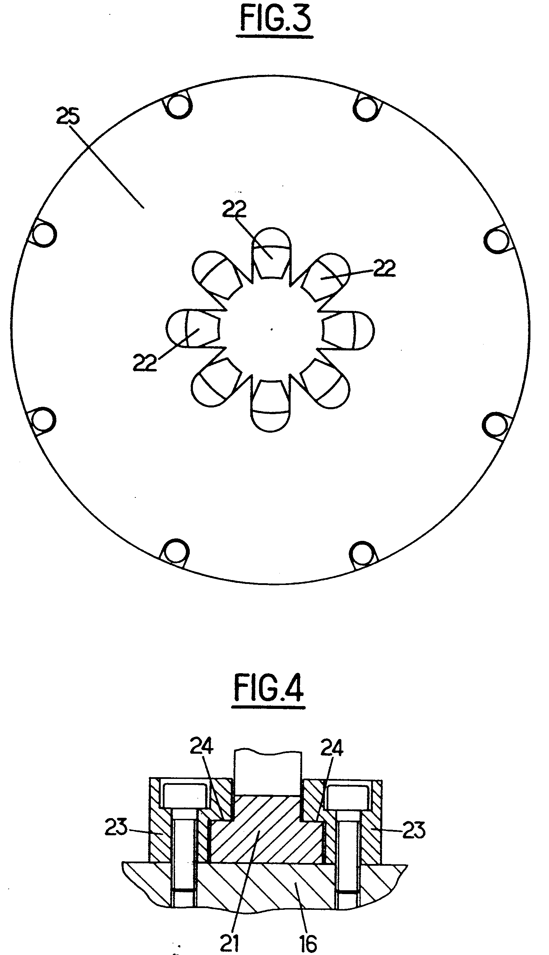

Le piston reçoit, d'autre part, des pièces annexes 23 (voir figure 4) qui comportent des contrepentes 24 assurant un déplacement des pièces 21 en direction du centre du dispositif, et provoquent ainsi le ressèrement des doigts lorsque le piston descend.

Le plateau est solidaire d'une couronne externe 26 elle-même solidaire d'une autre couronne externe 27.

La couronne 26 et la pièce 11 du corps 10 délimitent entre elles une chambre 28 alimentée par une canalisation 29. L'alimentation de cette chambre 28 provoque la montée du plateau.

Les deux couronnes 26,27 et la pièce 11 délimitent une chambre 30 alimentée par une canalisation 31. L'alimentation de cette chambre 30 provoque la descente du plateau.

Bien entendu, lors de l'alimentation d'une chambre, l'autre chambre est à l'échappement.

Les doigts 22 possèdent une course importante, ce qui permet d'admettre des roues ayant des orifices centraux de diamètres variés.

L'encombrement vertical des doigts est limité, ce qui permet d'admettre des roues ayant des orifices centraux borgnes.

Le montage d'une roue en vue de son équilibrage s'effectue de la manière suivante : la roue est posée manuellement ou automatiquement sur le dispositif en position de repos, c'est-à-dire le plateau en position basse et les doigts en position centrale (resserrés).

La chambre 17 est alimentée sous une pression suffisante pour écarter les doigts qui prennent alors appui contre le bord de l'orifice central 2 de la roue afin de centrer celle-ci.

La chambre 28 est alimentée, ce qui a pour effet de faire monter le plateau d'une valeur faible f (voir figure 2) mais suffisante pour réaliser le plaquage de la roue sur ce plateau, ce qui assure sa bonne horizontalité.

La roue étant centrée et orientée, la pression dans la chambre 17 augmente fortement afin d'assurer un effort de bridage suffisant. Le nombre important de doigts (huit doigts dans ce cas, voir figure 3) permet un effort total de bridage suffisant sans pour autant dépasser la pression de contact permise par les doigts sur le bord de l'orifice central de la roue.

L'ensemble, dispositif et roue, peut alors être entraîné en rotation pour mesurer le balourd. L'ensemble est ensuite freiné et la roue est équilibrée en conséquence. Après avoir alimenté les chambres 19 et 30 simultanément, ce qui a pour effet de libérer les doigts et de redescendre le plateau, la roue peut être retirée.

Le dispositif est alors prêt pour équilibrer une autre roue.

## Revendications

1. Dispositif (10) permettant le montage d'une roue (1) à l'extrémité d'une broche d'une équilibreuse, comportant un plateau (25) sur lequel la roue vient en appui, et des doigts (22) autocentrants engagés dans l'orifice central (2) de la roue (1), caractérisé en ce que le plateau est mobile selon l'axe principal du dispositif afin d'assurer un plaquage de la roue, les doigts autocentrants assurant le bridage de la roue.

2. Dispositif selon la revendication 1, caractérisé en ce que les doigts sont manoeuvrés à l'aide d'un piston (16) possédant des plans inclinés (16a) coopérant avec un plan incliné (21a) de pièces coulissantes (21) chacune solidaire d'un doigt (22).

3. Dispositif selon la revendication 1 ou 2, caractérisé en ce que le piston (16) et le plateau (25) sont manoeuvrés hydrauliquement.

4. Dispositif selon l'une des revendications précédentes, caractérisé en ce que le piston (16) est manoeuvré par l'intermédiaire de deux chambres de travail, une chambre de travail (17) pour la montée du piston et une chambre de travail (19) pour la descente du piston.

5. Dispositif selon l'une des revendications précédentes, caractérisé en ce que le plateau (25) est manoeuvré par l'intermédiaire de deux chambres de travail, une chambre (28) assurant la montée du plateau et une chambre (30) assurant la descente du plateau.

6. Procédé de montage d'une roue (1) sur un dispositif (10) fixé à l'extrémité d'une broche, consistant à engager l'orifice central (2) de la roue sur des doigts autocentrants (22) rétractés du dispositif, à laisser reposer la pièce sur un plateau (25) du dispositif, à écarter les doigts afin de centrer la roue, caractérisé en ce qu'il consiste à soulever le plateau afin d'assurer le plaquage de la roue, et à augmenter la pression des doigts contre l'orifice central de la roue afin de la brider.

7. Procédé selon la revendication 6, caractérisé en ce que le centrage s'effectue à une pression plus faible que la pression de bridage.

## FIG.1

FIG.2

# FIG.3

# FIG.4

Office européen
des brevets

**RAPPORT DE RECHERCHE EUROPEENNE**

Numero de la demande

EP 91 40 1628

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 400 506 (WARKOTSCH)<br>* En entier * | 1-3,6 | G 01 M 1/04 |
| Y | PATENT ABSTRACTS OF JAPAN, vol. 14, no. 150 (P-1025)[4093], 22 mars 1990; & JP-A-2 10 240 (MATSUSHITA) 16-01-1990<br>* En entier * | 1-3,6 | |
| A | DE-A-3 641 295 (DAIMLER-BENZ)<br>* Colonne 2, lignes 50-68; colonne 3, lignes 1-6; figure 1 * | 1 | |

DOMAINES TECHNIQUES RECHERCHES (Int. Cl.5)

G 01 M

Le présent rapport a été établi pour toutes les revendications

| Lieu de la recherche | Date d'achèvement de la recherche | Examinateur |
|---|---|---|
| LA HAYE | 02-08-1991 | ZAFIROPOULOS N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant